# EUROPEAN PATENT APPLICATION

(11) **EP 4 657 355 A1**
(43) Date of publication of application: **03.12.2025**
(21) Application number: 24883606.6
(22) Date of filing: 20.11.2024
(51) Int. Cl.: G06Q 40/12

(54) **METHOD AND APPARATUS FOR PERFORMING FULL-LINK RECONCILIATION ON BASIS OF SNOWFLAKE ALGORITHM, AND DEVICE AND MEDIUM**

(30) Priority: 06.12.2023 CN 202311659348
(71) Applicant: Hangzhou Pingpong Intelligence Technology Co. Ltd., Hangzhou, Zhejiang 310052 (CN)
(72) Inventor: WANG, Binbin, Hangzhou, Zhejiang 310052 (CN); ZHU, Junying, Hangzhou, Zhejiang 310052 (CN); CHEN, Peng, Hangzhou, Zhejiang 310052 (CN); XUN, Shuanggui, Hangzhou, Zhejiang 310052 (CN); CHEN, Yu, Hangzhou, Zhejiang 310052 (CN); LU, Shuai, Hangzhou, Zhejiang 310052 (CN); WANG, Ning, Hangzhou, Zhejiang 310052 (CN)
(74) Representative: Meyer-Dulheuer MD Legal Patentanwälte PartG mbB
(86) International application number: PCT/CN2024/133132
(87) International publication number: WO 2025/118972

(57) **Abstract**

A full-link reconciliation method based on a snowflake algorithm, an apparatus, a device, and a medium are provided. The method includes: responding to a reconciliation request of a cross-border service and acquiring bill source data from a service end; parsing the bill source data, and converting the bill source data into target bill data; calling a reconciliation rule engine to acquire a corresponding reconciliation rule, selecting a corresponding reconciliation algorithm, and performing a full-link reconciliation task on the target bill data to acquire a reconciliation result; transmitting unbalanced data to a corresponding exception processing system for a check processing of abnormal data; generating, based on an optimized snowflake algorithm, a unique target ID to perform a corresponding bill association with the reconciliation result, automatically penetrating, according to the unique target ID corresponding to the reconciliation result, full link data of an information flow and a fund flow, and tracing, according to the unique target ID, a whole process of the corresponding bill flowing between the fund flow and the information flow, to achieve a complete closed-loop of reconciliation and improve reconciliation operating efficiency and data accuracy of a full-link cross-border service.

## Description

### CROSS-REFERENCE TO RELATED APPLICATION

This application claims priority to Chinese patent application No. 202311659348.7, filed on December 6, 2023. The content of the above identified application is hereby incorporated herein in its entirety by reference.

### TECHNICAL FIELD

The present invention generally relates to the field of reconciliation technology, and in particular, to a full-link reconciliation method based on a snowflake algorithm, an apparatus, a device, and a medium.

### BACKGROUND

There are many problems in the cross-border payment industry. There is no unified standard for overseas banks, the transaction link is too long, and the transaction aging is difficult to control. In addition, each company has its own unique business scenarios. Business scenario processes are different from each other. For example, some large companies manage services according to subsidiaries or major departments. Each service form is completely different, for example, overseas collection service, overseas receipt service, overseas credit service, overseas foreign exchange service, etc. From information flow service data of the user to the last fund flow data, the full link involves the international fund flow. In this case, a flow link span is very large. In the whole link execution process, order splitting and combination of each segment are involved. The funds are transferred in/out through different bank channels, resulting in that the final service data and fund data cannot form a closed-loop link.

In conclusion, at present, a data flow span generated by overseas services during reconciliation is large, and the service data and fund data are transferred in/out through different channels. Therefore, it is difficult to form a complete closed-loop link during reconciliation. At the same time, there is no unified standard for overseas banks to implement reconciliation from user information flow to fund flow, which is an ultra-long transaction link, and it is difficult to cope with reconciliation differences in the ultra-long link. Currently, effective solutions have not been proposed.

### SUMMARY

An objective of the present invention is to provide a full-link reconciliation method based on a snowflake algorithm, an apparatus, a device, and a medium to solve problems in a complicated cross-border service reconciliation system. Based on a unified reconciliation center, services in various special scenarios may be formed into a unified service platform in manners of abstraction, aggregation, analysis, and the like. Distributed ID generation services may be established based on an improved snowflake algorithm to improve data accuracy and aging in high-concurrency scenarios. Personalized rule engines may be configured according to rules, so as to acquire, mark and verify bank bills in time. Bidirectional reconciliation may be implemented automatically according to models, and diversified data association and matching may be supported for complex product logic of each bank. According to a reconciliation result, a full link of an information flow and a fund flow may be automatically penetrated. A unique ID may record an entire process of order flowing, so that a service balance and an account balance may be completely matched with each other at any time point. The difference may be clear and confirmed. This may greatly simplify the data checking process, and improve operating efficiency and data accuracy.

The full-link reconciliation method based on the snowflake algorithm is provided in the present invention, including: responding to a reconciliation request of a cross-border service and acquiring bill source data from a service end; parsing the bill source data based on a unified reconciliation center, and converting the bill source data into target bill data; calling a reconciliation rule engine to acquire a corresponding reconciliation rule to match with different data admission conditions of a cross-border payment end, selecting a corresponding reconciliation algorithm after the reconciliation rule is executed, and performing a full-link reconciliation task on the target bill data to acquire a reconciliation result, in which the reconciliation task includes a fund reconciliation, a document reconciliation, and a flow reconciliation; determining whether the reconciliation result is a balance reconciliation in a process of performing the full-link reconciliation task, and transmitting unbalanced data to a corresponding exception processing system for a check processing of abnormal data until the reconciliation result is a balance reconciliation, in which the balance reconciliation means that a balance acquired from a service system at the same moment is the same as that acquired from a financial system; and generating, based on an optimized snowflake algorithm, a unique target ID to perform a corresponding bill association with the reconciliation result, automatically penetrating, according to the unique target ID corresponding to the reconciliation result, full link data of an information flow and a fund flow, and tracing, according to the unique target ID, a whole process of the corresponding bill flowing between the fund flow and the information flow, to achieve a complete closed-loop of reconciliation.

Alternatively, before calling the reconciliation rule engine, the method further includes: performing reconciliation configuration on an information flow corresponding to the bill source data, checking the reconciliation configuration, in which checking the reconciliation configuration includes determining whether configuration parameters are verified; after the parameters are verified successfully, determining whether the reconciliation is hedge, when the reconciliation is hedge, performing a restoring operation on differential pool data generated when the previous reconciliation is the balance reconciliation, and then performing a deleting operation on the differential pool data, meanwhile, after a deleting operation is performed on previous reconciliation data, writing the bill source data into Redis in a form of the target statement; when the parameters are failed to be verified, directly writing the bill source data into the Redis in the form of the target statement; determining whether a database has an exception in a process of writing the bill source data to the Redis, performing a check operation on the target statement when no exception occurs, and after reading the bill source data generated in the form of the target statement from a cache of the Redis, entering a next operation of calling the reconciliation rule engine, in which the bill source data is read from cached data of the Redis in a Cousor manner, and the Cousor manner includes: triggering a mechanism for extracting one cached data record every time from a result set, which includes a plurality of cached data records, and when the user accesses any row of cached data in the result set, placing a cursor on a target row, performing an operation on the target row or a row block at a target location, and acquiring a temporary file formed by a cursor location pointing to a target cache data record in the result set.

Alternatively, before responding to the reconciliation request of the cross-border service, the method further includes: establishing a data exchange path between a reconciliation service system and a financial system, generating the unified reconciliation center according to the data exchange path and performing convergence case-management, and establishing a distributed ID generation service based on the optimized snowflake algorithm to generate a plurality of target IDs in a high-concurrency environment; when the current process is in a bill parsing state, generating a first target ID based on the established ID generation service, marking the reconciliation data according to the first target ID, and recording a flow process of the reconciliation data in the bill parsing state; when the current process is in a reconciliation execution state, generating a second target ID based on the established ID generation service, marking the reconciliation data according to the second target ID, and recording a flow process of the reconciliation data in the reconciliation execution state; and when the current process is in a data penetrating state, performing bill association across reconciliation dimensions according to the first target ID to match with a cross-level data relationship, generating penetration information from the information flow to the fund flow, and ensuring, in a timely manner according to the penetration information, that an exception is discovered and prompted.

Alternatively, generating, based on the optimized snowflake algorithm, the unique target ID further includes: acquiring a first timestamp in a current state, and performing a division operation on the first timestamp to obtain a second timestamp in a second level; acquiring a third timestamp of a previous generation of ID, and determining whether the third timestamp is the same as the second timestamp; when the second timestamp is different from the third timestamp, if the second timestamp is less than the third timestamp, falling back a system clock, and taking the third timestamp as the second timestamp; when the second timestamp is the same as the third timestamp, generating the ID in the same second, generating a sequence number by self-accretion, assigning the sequence number to a variable s, and determining, by performing AND operation on the variable s and the sequence number, whether the sequence number reaches a maximum threshold; when the maximum threshold is reached, a current thread entering a sleep state until entering a next second, in which the variable s is configured to store the sequence number; and generating a hybrid code by combining a preset shift operation and a function call, in which the hybrid code is obtained in the following manner: left shifting the second timestamp by a preset bit to acquire a timestamp part, acquiring an identifying part of a work node by the function call, performing a bitwise OR operation on the sequence number s, to obtain a final hybrid code, and returning a generated distributed ID. The optimized snowflake algorithm includes a 1-bit identification bit, a 31-bit timestamp bit, a 15-bit operation machine id, and a 17-bit sequence number.

Alternatively, parsing the bill source data based on the unified reconciliation center, and converting the bill source data into the target bill data further includes: triggering a data acquiring operation according to a service notification or a preset time, generating a reconciliation collection task, and executing a corresponding download task; reading the download task, periodically executing the download task, and determining whether the target bill file is downloaded; if the target bill file is downloaded, reading an unparsed record of the target bill file, triggering a parsing operation on the target bill file, selecting a corresponding parsing template according to a preset file type, parsing data in the target bill file and warehousing, performing data cleaning and conversion to a target statement, and generating a conversion record according to a reconciliation dimension; and if the target bill file is not downloaded, determining whether the current quantity of downloads reaches the maximum quantity of attempts; if the current quantity of downloads does not reach the maximum quantity of attempts, continuing to try the download task again; and if the current quantity of downloads reaches the maximum quantity of attempts, determining whether there is a downloaded file; if there is a downloaded file, marking success; and if there is no downloaded file, performing a failure alarm. The target bill file includes a bank bill and a non-bank bill.

Alternatively, calling the reconciliation rule engine to acquire the corresponding reconciliation rule further includes: in a one-to-one reconciliation rule pattern, extracting a piece of the target bill data of a first counterparty and a piece of the target bill data of a second counterparty, accumulating amounts bilaterally according to a preset dimension and a preset amount accumulation algorithm, and in a case of bilateral reconciliation, matching an accumulative amount of the first counterparty with and an accumulative amount of the second counterparty, and determining whether it is the balance reconciliation, in which the preset dimension includes at least an account number or a master reconciliation ID; in a one-to-one reconciliation rule pattern, extracting a piece of the target bill data of the first counterparty and a piece of the target bill data of the second counterparty, and after setting a target field according to a field matching algorithm, matching the target field of the first counterparty with the target field of the second counterparty, and determining whether it is the balance reconciliation; and in a one-to-more or more-to-one reconciliation rule pattern, extracting a piece of the target bill data of the first counterparty and a plurality of pieces of the target bill data of the second counterparty, or extracting a plurality of pieces of the target bill data of the first counterparty and a piece of the target bill data of the second counterparty, accumulating amounts unilaterally according to a preset amount accumulation algorithm, and in a case of unilateral reconciliation, matching an accumulative amount of a plurality of master/slave bills with the same attribute of the master reconciliation ID with an amount in a corresponding slave/master bill, determining whether it is the balance reconciliation. The target bill data includes a gateway statement, a bank statement, a document statement, and a flow statement.

Alternatively, selecting the corresponding reconciliation algorithm after the reconciliation rule is executed further includes: when the reconciliation task is to execute an inbound transaction and is configured with the one-to-more reconciliation rule, selecting a difference reconciliation algorithm to perform a first reconciliation operation, in which the first reconciliation operation includes: confirming a checked target field in the one-to-more reconciliation rule, acquiring a master bill and a slave bill and performing a loop circle operation, accumulating amounts under the same target field in the slave bill to obtain an accumulated amount, and matching the accumulated amount with the same data in the master bill, in which if the match is successful, the reconciliation is the balance reconciliation; otherwise, the reconciliation is not the balance reconciliation, the operation is ended; when the reconciliation task is to execute the inbound transaction and is configured with the one-to-one reconciliation rule, selecting a standard reconciliation algorithm to perform a second reconciliation operation, in which the second reconciliation operation includes: acquiring the master bill and the slave bill and performing the loop circle operation, performing a preset sequence arrangement according to a target field, and performing matching on data in the target field in the secondary bill, in which if data under the target field in the sequence is matched, the reconciliation is the balance reconciliation, the operation is ended; and when the reconciliation task is to execute a transfer transaction and is configured with the one-to-one reconciliation rule, selecting a data matching algorithm to perform a third reconciliation operation, in which the third reconciliation operation includes: acquiring the master bill and the slave bill and performing the loop circle operation, performing data filtering on the master bill and the slave bill according to a preset condition, and perform matching on the same piece of data in the master bill and the slave bill after being concatenated with an amount according to a respective target field. If the match is successful, the reconciliation is the balance reconciliation; otherwise, the reconciliation is not the balance reconciliation, the operation is ended. The target field includes one or more combinations of a bank, an amount, a currency, and the master reconciliation ID.

Alternatively, transmitting unbalanced data to a corresponding exception processing system for check processing of abnormal data until the reconciliation result is a balance reconciliation further includes: starting a normal reconciliation mode, comparing the master bill with the slave bill, and when an output comparison result shows that the slave bill is not balanced, determining whether the slave bill is a one-side bill; if the slave bill is not a one-side bill, determining whether the amount of the slave bill is different from that of the master bill, if the amount of the slave bill is different from that of the master bill, registering a master/slave one-side bill error record, periodically triggering to acquire the error record for global error record matching, and transferring the error record to the unified reconciliation center to perform a unified reconciliation engine; if the slave bill is a one-side bill, registering a slave one-side bill error, transmitting error data to a Pending system to confirm whether the error data is in-transit fund data, and meanwhile, transmitting the error data to an error processing center for the check operation of abnormal data, determining whether the error data needs to be cancelled, if the error data needs to be cancelled, performing a write-off operation until balance reconciliation, if the error data does not need to be cancelled, transmitting the error data to an error pool for reconciliation; and when the error data still exists after all the foregoing manners is performed, performing a repair operation on the error data, in which the repair operation includes: performing a split operation or a combination operation on a plurality of pieces of data in the error data according to a preset repair field, and performing reconciliation until balance reconciliation.

The full-link reconciliation apparatus based on the snowflake algorithm is provided in the present invention, including an acquiring module, a parsing module, a reconciliation module, a determining module, and a penetrating module. The acquiring module is configured for responding to a reconciliation request of a cross-border service and acquiring bill source data from a service end. The parsing module is configured for parsing the bill source data based on a unified reconciliation center, and converting the bill source data into target bill data. The reconciliation module is configured for calling a reconciliation rule engine to acquire a corresponding reconciliation rule to match with different data admission conditions of a cross-border payment end, selecting a corresponding reconciliation algorithm after the reconciliation rule is executed, and performing a full-link reconciliation task on the target bill data to acquire a reconciliation result, in which the reconciliation task includes a fund reconciliation, a document reconciliation, and a flow reconciliation. The determining module is configured for determining whether the reconciliation result is a balance reconciliation in a process of performing the full-link reconciliation task, and transmitting unbalanced data to a corresponding exception processing system for a check processing of abnormal data until the reconciliation result is a balance reconciliation, in which the balance reconciliation means that a balance acquired from a service system at the same moment is the same as that acquired from a financial system. The penetrating module is configured for generating, based on an optimized snowflake algorithm, a unique target ID to perform a corresponding bill association with the reconciliation result, automatically penetrating, according to the unique target ID corresponding to the reconciliation result, full link data of an information flow and a fund flow, and tracing, according to the unique target ID, a whole process of the corresponding bill flowing between the fund flow and the information flow, to achieve a complete closed-loop of reconciliation.

An electrical device is provided in the present invention, including a memory and a processor. The memory is configured to store a processing program, and the processor is configured to execute the computer program to implement the full-link reconciliation method based on the snowflake algorithm.

A computer-readable storage medium is provided in the present invention, storing a processing program. The processing program is executed by a processor to implement the full-link reconciliation method based on the snowflake algorithm.

Compared with the related art, the present invention has the following advantages.

In the full-link reconciliation method based on the snowflake algorithm provided in the present invention, the distributed ID generation service is established based on the optimized snowflake algorithm, a full link of an information flow and a fund flow may be automatically penetrated by the unique ID, 130000 IDs may be generated per second through a secondary improvement of the snowflake algorithm in a high-concurrency scenario in a distributed environment, so as to improve data accuracy and aging in the high-concurrent scenario.

In the present invention, different file formats between cross-border banks may be integrated, personalized rule engines may be configured according to rules, so as to acquire, mark and verify bank bills in time. Reconciliation association numbers may be recorded, bidirectional reconciliation may be implemented automatically according to models, and diversified data association and matching may be supported for complex product logic of each bank. According to the reconciliation result, the full link of the information flow and the fund flow may be automatically penetrated. The unique ID may record the entire process of order flowing, so that a service balance and an account balance may be completely matched with each other at any time point. The difference may be clear and confirmed. This may greatly simplify the data checking process, and improve operating efficiency and data accuracy. Based on requirements of finance and service development, and meeting requirements of both parties, a set of standardized processes and standards may be established for convergence case-management, and an offline reconciliation process may be implemented online through technology. Service processes and financial requirements to establish a set of reconciliation models. A complete reconciliation loop may be achieved by checking of the fund flow, the information flow, and a user balance, to ensure consistency, integrity, and accuracy of data between the service system and the financial system.

In the present invention, the unified reconciliation rule engine is called to acquire the corresponding reconciliation rule to match with different data admission conditions of the cross-border payment end, and the corresponding reconciliation algorithm is selected after the reconciliation rule is executed, so as to improve reconciliation efficiency and data accuracy.

In the present invention, a penetration logic may implement accurate cross-level data association and penetration by solving difficulties such as multiple-level data association, data inconsistency, and exception processing, which has a relatively high technical breakthrough point. This penetration logic may provide reliable data support for clearing and settlement operations and financial operations, and improve reconciliation accuracy and efficiency.

### BRIEF DESCRIPTION OF THE DRAWINGS

FIG. 1 is a step diagram of a full-link reconciliation method based on a snowflake algorithm in an embodiment of the present invention.
FIG. 2 is a schematic diagram of an overall architecture of a unified reconciliation center in a clearing and settlement service in an embodiment of the present invention.
FIG. 3 is a flowchart of step 1 in an embodiment of the present invention.
FIG. 4 is a flowchart of a service process for bill parsing in an embodiment of the present invention.
FIG. 5 is a flowchart of a check processing of abnormal data at step 4 in an embodiment of the present invention.
FIG. 6 and FIG. 7 are flowcharts of a specific service process at step 4 in an embodiment of the present invention.
FIG. 8 is a schematic diagram of an optimized snowflake algorithm in an embodiment of the present invention.

### DETAILED DESCRIPTION OF THE EMBODIMENT

To make objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are merely some rather than all of the embodiments of the present invention. Based on the embodiments of the present invention, all other embodiments obtained by one skilled in the art without creative efforts fall within the protection scope of the present invention.

### A first embodiment

The term "include" and modification thereof as used herein may be open, i.e., "include but not limited to". The term "based" may represent "based at least in part". The term "an embodiment" may represent "at least one embodiment". The term "another embodiment" may represent "at least one another embodiment". The term "some embodiments" may represent "at least some embodiments". Definitions of other terms may be provided in the following description.

It should be noted that concepts such as "once" and "second" mentioned in the disclosure of the present invention are only used to distinguish between different apparatuses, modules, or units, and are not used to limit a sequence or an interdependence of functions performed by these apparatuses, modules, or units.

It should be noted that modification of "one" and "a plurality of' mentioned in the present invention is exemplary and not limiting. One skilled in the art should understand that, unless otherwise specified in the context, the modification is understood as "one or more".

There are many problems in the cross-border payment industry. There is no unified standard for overseas banks, a transaction link is too long, and the transaction aging is difficult to control. In addition, each company has its own unique business scenarios. Business scenario processes are different from each other. For example, some large companies manage services according to subsidiaries or major departments. Each service form is completely different, for example, overseas collection service, overseas receipt service, overseas credit service, overseas foreign exchange service, etc. From information flow service data of the user to the last fund flow data, the full link involves the international fund flow. In this case, a flow link span is very large. In the whole link execution process, order splitting and combination of each segment are involved. The funds are transferred in/out through different bank channels, resulting in that the final service data and fund data cannot form a closed-loop link. The financial personnel cannot accurately locate the link of fund vulnerability when fund risk occurs. In this case, respective departments check data such as funds, transactions, and accounting services. In the operation process, there will be problems such as data discrepancy processing or other operation problems, which lead to no unified group and system coordination. The other problem is that the financial personnel need to analyze the business transaction reconciliation process themselves, and then manually check with the bank flow. The business development and timeliness cannot be satisfied with the business growth. During the construction of the system, a large number of departments in the cross-border service of the system must be subject to high concurrent and reconciliation time.

In the view of the foregoing cross-border service problems, a full-link reconciliation method based on a snowflake algorithm is provided in the present invention, which is applicable to a unified reconciliation center system.

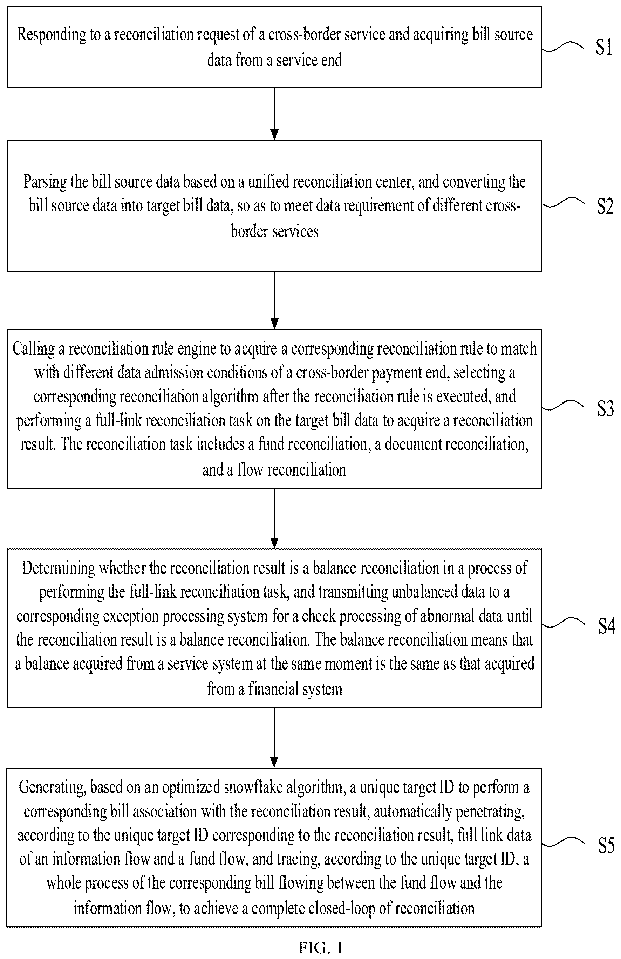

Referring to FIG. 1, a specific full-link reconciliation method includes step 1 to step 5.

Step 1 includes responding to a reconciliation request of a cross-border service and acquiring bill source data from a service end. The bill source data may be pushed by a service side when a transaction form is transferred to a status after receiving the service data. The bill source data may be pushed centrally from ETL (Extract-Transform-Load) of a data department. A payment channel, such as a statement paid by a bank or three parties, may also be acquired in an API (Application Programming Interface) query or push manner, an ftp download manner, and an email manner.

Step 2 includes parsing the bill source data based on a unified reconciliation center, and converting the bill source data into target bill data, so as to meet data requirement of different cross-border services. The target bill data parsed finally may meet an interaction requirement between a service system and a financial system. In the present embodiment, the parsing and converting process may be performed by using a bill collection system, so as to collect and acquire data of each service system which is configured to reconcile data sources that match bilateral bills, and is applicable to cross-border services that require strict data admission and legal consistency.

Step 3 includes calling a reconciliation rule engine to acquire a corresponding reconciliation rule to match with different data admission conditions of a cross-border payment end, selecting a corresponding reconciliation algorithm after the reconciliation rule is executed, and performing a full-link reconciliation task on the target bill data to acquire a reconciliation result. The reconciliation task includes a fund reconciliation, a document reconciliation, and a flow reconciliation.

Step 4 includes determining whether the reconciliation result is a balance reconciliation in a process of performing the full-link reconciliation task, and transmitting unbalanced data to a corresponding exception processing system for a check processing of abnormal data until the reconciliation result is a balance reconciliation. The balance reconciliation means that a balance acquired from a service system at the same moment is the same as that acquired from a financial system.

Step 5 includes generating, based on an optimized snowflake algorithm, a unique target ID to perform a corresponding bill association with the reconciliation result, automatically penetrating, according to the unique target ID corresponding to the reconciliation result, full link data of an information flow and a fund flow, and tracing, according to the unique target ID, a whole process of the corresponding bill flowing between the fund flow and the information flow, to achieve a complete closed-loop of reconciliation.

The full-link reconciliation method provided in the present invention solves problems in a complicated cross-border service reconciliation system, such as absence of unified standards in the overseas banks, excessive transaction links, and cross-border problems in a transaction time zone. The unified reconciliation center can form a unified methodology and solution for services in various special scenarios by abstracting, aggregating and analyzing, and set up distributed ID generation services to improve data accuracy and aging in high-concurrent scenarios. Different file formats between cross-border banks may be integrated, personalized rule engines may be configured according to rules, so as to acquire, mark and verify bank bills in time. Reconciliation association numbers may be recorded, bidirectional reconciliation may be implemented automatically according to models, and diversified data association and matching may be supported for complex product logic of each bank. According to the reconciliation result, the full link of the information flow and the fund flow may be automatically penetrated. The unique ID may record the entire process of order flowing, so that a service balance and an account balance may be completely matched with each other at any time point. The difference may be clear and confirmed. This may greatly simplify the data checking process, and improve operating efficiency and data accuracy. Based on requirements of finance and service development, and meeting requirements of both parties, a set of standardized processes and standards may be established for convergence case-management, and an offline reconciliation process may be implemented online through technology. A clearing and settlement platform may integrate service processes and financial requirements to establish a set of reconciliation models. A complete reconciliation loop may be achieved by checking of the fund flow, the information flow, and a user balance, to ensure consistency, integrity, and accuracy of data between the service system and the financial system.

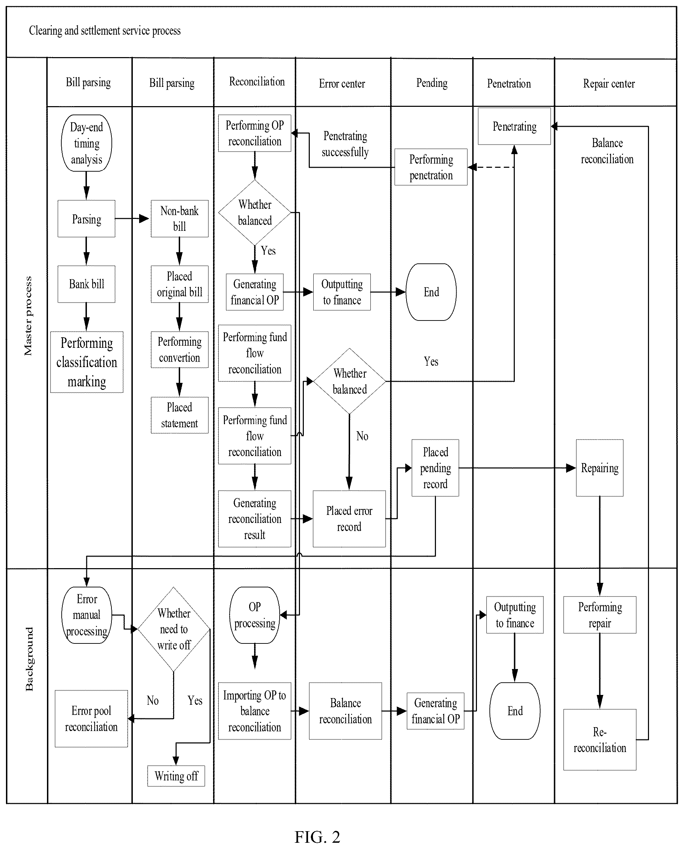

Referring to FIG. 2, in the present embodiment, a service process based on the unified reconciliation center may be as follows: 1. a data principle in the present embodiment is that data is provided by the service system and received by the reconciliation center, and then a next reconciliation process is performed. Firstly, the unified reconciliation center defines data transmission specifications, including defining data contents, formats, interaction forms, and data irregularities. A set of mandatory and extensible standards is defined for the core process of service logic and the unified reconciliation system. 2. After the definition, the unified reconciliation center collects or acquires bill data of each service system, and each service system pushes the bill data to the SFTP (Secure File Transfer Protocol) required by the reconciliation system for processing through a bill analysis system. 3. The bill analysis system parses the bills to be checked. A core system of the reconciliation center acquires the bills and the bills are processed by the reconciliation engine, which includes reconciliation rules and reconciliation matching algorithms, such as an optimal matching algorithm, a common data matching algorithm, an exception matching algorithm, reconciliation model training, and reconciliation core. The reconciliation center is configured for a full-link reconciliation, including external fund reconciliation, internal document reconciliation, flow reconciliation, and final customer account balance reconciliation. 4. Cross-border service reconciliation is not as easy as domestic reconciliation. For example, long transaction links, cross-period date switching, exchange amount conversion, etc. If the reconciliation is completed and is not a balance reconciliation, the check data will be pushed to an error center system. 5. The error center system checks abnormal data such as ledger, write-off, and daily switching. If the error center cannot handle error data under certain rules, the error data is pushed to a repair center system for processing, and the error data is pushed to a Pending system for financial dimension registration. 6. The repair center system is used. Some scenario data may be reconciliated actually, but not be reconciliated since payment or settlement is performed by multiple banks, so the scenario data needs to be split and combined by the repair center. The repair center supports one-to-one data splitting, one-to-more data splitting, and more-to-one data splitting. 7. Entering the Pending system indicates that the error data are not claimed at the current time point. In-transit funds are calculated according to financial standards, such as funds and services. 8. The full-link data is penetrated through a distributed unique ID by a penetrating system, and the unique ID is generated by a snowflake algorithm generator. 9. Field information of the bank flow is penetrated from the source to the service flow data, the transaction completion date of the bank flow is accumulated, and reconciliation of the customer account balance is performed. 10. Finally, the result is summarized and output from the financial system according to financial dimensions.

In the data flow involved in the above process, the fund reconciliation may include check of bank flow VS gateway order and bank statement VS gateway statement. Document reconciliation may include check of gateway order VS transaction document and gateway statement VS document statement. Flow reconciliation may include check of transaction document VS account flow and document statement VS flow statement. One skilled in the art may understand that a meaning of a data flow is as follows: 1. A gateway statement: an internal gateway order on a side of a company which interacts with a bank or a payment channel, the internal gateway order is configured for a data source of a company side of the fund reconciliation, to abstract a bill required for the reconciliation. 2. Bank statement: an external bill provided by a bank or a payment channel. In other words, the bank statement is called a 053 day-end statement in a cross-border standard, configured for a data source of a payment channel side of the fund reconciliation, to abstract a bill required for the reconciliation. 3. Document statement: internal transaction documents of each service system or transaction documents on a side of each service system which interacts with the gateway order, configured for a data source of the document reconciliation, to abstract a bill required for the reconciliation. 4. Flow statement: flow between internal accounts of each service system and flow on a side of each service system which interacts with the transaction documents, configured for a data source of the flow reconciliation, to abstract a bill required for the reconciliation. 5. Fund reconciliation: check between the gateway statement and the bank statement. The reconciliation is performed through the reconciliation engine, and the reconciliation rule is 1 to 1. 6. Document reconciliation: check between the gateway statement and the document statement. The reconciliation is performed through the reconciliation engine. The reconciliation rules are diversified. The rules are configured through a rule engine. One to one, one to more, and more to one are supported. 7. Flow reconciliation: check between the document statement and the flow statement. The reconciliation is performed through the reconciliation engine. The reconciliation rules are diversified. The rules are configured through the rule engine. One to one and one to more are supported.

The process of bill parsing may be automated or manual. Data admission conditions of cross-border services may be inconsistent, i.e., the cross-border services have difficulty such as complexity and particularity. To overcome the complexity and particularity of the cross-border services, the billing collection system abstractly defines the service scenarios as follows:

| Serial number | Service department | Type | Production file root directory | Service type | File prefix |
|---|---|---|---|---|---|
| 1 | A | Fund system | bill/bank | Bank flow | BANK_FLOW |
| 2 | B | Order system | bill/order | Payout order | PAYOUT_ORDER |
| 3 | C | Order system | bill/order | Inbound order | INBOUND_ORDER |
| 3 | D | Transaction System | bill/inbound | Inbound document | TRADE_NBOUND |
| 4 | E | Transaction System | bill/inbound | Payout document | TRADE_PAYOUT |
| 5 | F | Account | bill/inbound | Account flow | ACCOUNT_FLOW |

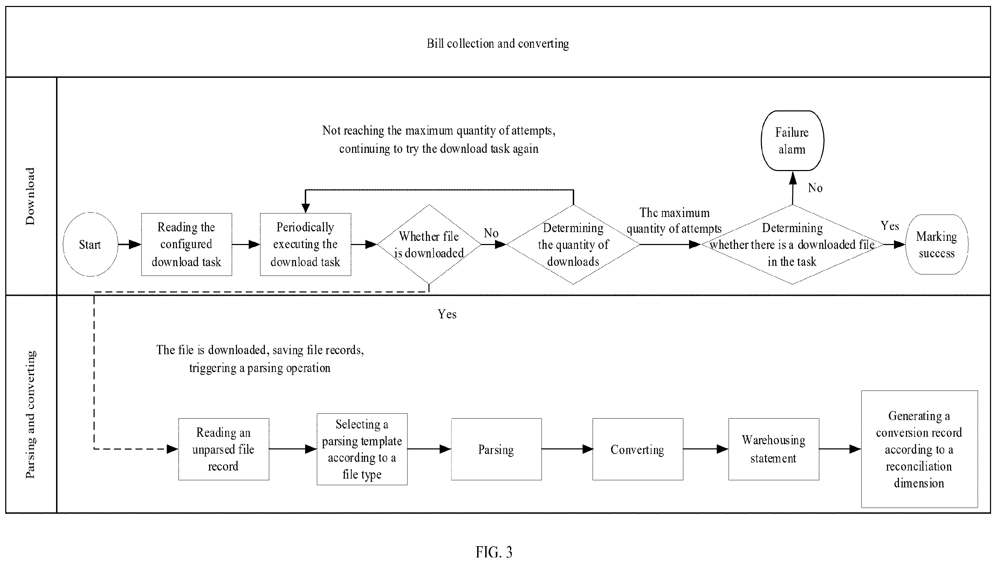

To integrate different file formats between cross-border banks, parsing the bill source data based on a unified reconciliation center, and converting the bill source data into target bill data at step 1 may specifically include the following steps: triggering a data acquiring operation according to a service notification or a preset time, generating a reconciliation collection task, and executing a corresponding download task; reading the configured download task, periodically executing the download task, and determining whether the target bill file is downloaded; if the target bill file is downloaded, reading an unparsed record of the target bill file, triggering a parsing operation on the target bill file, selecting a corresponding parsing template according to a preset file type, parsing data in the target bill file and warehousing, performing data cleaning and conversion to a target statement, and generating a conversion record according to a reconciliation dimension; and if the target bill file is not downloaded, determining whether the current quantity of downloads reaches the maximum quantity of attempts; if the current quantity of downloads does not reach the maximum quantity of attempts, continuing to try the download task again; and if the current quantity of downloads reaches the maximum quantity of attempts, determining whether there is a downloaded file; if there is a downloaded file, marking success; and if there is no downloaded file, performing a failure alarm. The target bill file includes a bank bill and a non-bank bill, referring to FIG. 3.

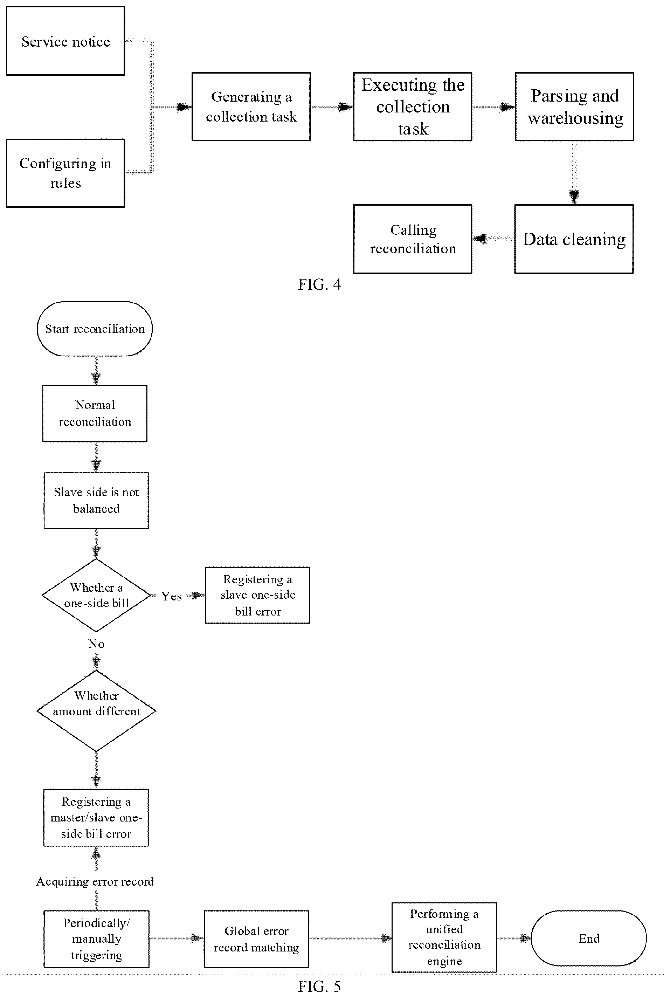

One skilled in the art may understand that a service process of performing bill parsing in the present embodiment may be as follows. Referring to FIG. 4, 1. Triggering: a. DP (Data producer) notice to acquire a bill; b. According to time rules agreed with DP. 2. Generating a data collection task. 3. Executing the data collection task. 4. Parsing and warehousing. 5. Data cleaning: converted to a statement, providing data for subsequent reconciliation module retrieval, and realizing timely acquisition, marking and verification of a bank bill. In the present embodiment, when the bank bill is periodically parsed, classification marking is performed, and original bill data is placed, conversion is performed, and the conversion is placed in the statement data. When a non-bank bill is parsed, original bill is placed in the original bill data, converted, and placed in the statement data. The DP refers to a PP (Production Planning) service line, an inbound bank, a payout bank, a data channel, and data uploaded by an operator. Data channel: Http push/query, FTP upload/download, message queue (MQ), offline file upload, database (DB).

In the present embodiment, statement data in the data source may be acquired, such as the gateway statement, the bank statement, the document statement, and the flow statement. To overcome a bottleneck of high data concurrency, a single check data may be read in a Redis cache. Specific steps may include: performing reconciliation configuration on an information flow corresponding to the bill source data, checking the reconciliation configuration, in which checking the reconciliation configuration includes determining whether configuration parameters are verified; after the parameters are verified successfully, determining whether the reconciliation is hedge, when the reconciliation is hedge, performing a restoring operation on differential pool data generated when the previous reconciliation is the balance reconciliation, and then performing a deleting operation on the differential pool data, meanwhile, after a deleting operation is performed on previous reconciliation data, writing the bill source data into Redis in a form of the target statement; when the parameters are failed to be verified, directly writing the bill source data into the Redis in the form of the target statement; determining whether a database has an exception in a process of writing the bill source data to the Redis, performing a check operation on the target statement when no exception occurs, and after reading the bill source data generated in the form of the target statement from a cache of the Redis, entering a next operation of calling the reconciliation rule engine, in which the bill source data is read from cached data of the Redis in a Cousor manner, and the Cousor manner includes: triggering a mechanism for extracting one cached data record every time from a result set, which includes a plurality of cached data records, and when the user accesses any row of cached data in the result set, placing a cursor on a target row, performing an operation on the target row or a row block at a target location, and acquiring a temporary file formed by a cursor location pointing to a target cache data record in the result set. The database cursor functions as a pointer in the database. The generated temporary file provides the capability of browsing the data forward or backward during querying the result set and processing the data in the result set. With the cursor, it facilitates the user to access any row of data in the result set. After the cursor is placed in a row, an operation may be performed on the row or a row block at the location.

In various embodiments of the present invention, calling the reconciliation rule engine to acquire the corresponding reconciliation rule at step 3 specifically includes the following steps: calling the reconciliation rule engine to acquire the corresponding reconciliation rule further includes: in a one-to-one reconciliation rule pattern, extracting a piece of the target bill data of a first counterparty and a piece of the target bill data of a second counterparty, accumulating amounts bilaterally according to a preset dimension and a preset amount accumulation algorithm, and in a case of bilateral reconciliation, matching an accumulative amount of the first counterparty with and an accumulative amount of the second counterparty, and determining whether it is the balance reconciliation, in which the preset dimension includes at least an account number or a master reconciliation ID; in a one-to-one reconciliation rule pattern, extracting a piece of the target bill data of the first counterparty and a piece of the target bill data of the second counterparty, and after setting a target field according to a field matching algorithm, matching the target field of the first counterparty with the target field of the second counterparty, and determining whether it is the balance reconciliation; and in a one-to-more or more-to-one reconciliation rule pattern, extracting a piece of the target bill data of the first counterparty and a plurality of pieces of the target bill data of the second counterparty, or extracting a plurality of pieces of the target bill data of the first counterparty and a piece of the target bill data of the second counterparty, accumulating amounts unilaterally according to a preset amount accumulation algorithm, and in a case of unilateral reconciliation, matching an accumulative amount of a plurality of master/slave bills with the same attribute of the master reconciliation ID with an amount in a corresponding slave/master bill, determining whether it is the balance reconciliation.

One skilled in the art may understand that the rule engine used in the present embodiment, i.e., matching different data admission conditions of the cross-border payment end, may dynamically set flexible reconciliation rules. A standard may include the following rules.
a) One to one, an account number and amount accumulation method: after the amount is accumulated in bilateral bills in the account number dimension, checking the accumulated amount one to one bilaterally.
b) One to one, a field matching method: after a specified field is set, matching all the checked fields one to one in bilateral bills.
c) One to more, a master reconciliation ID and amount accumulation method: accumulating amounts with the same master reconciliation ID on a slave side and changing to one piece before matching.
d) More to one, a master reconciliation ID and amount accumulation method: accumulating amounts with the same master reconciliation ID on a master side and changing to one piece before matching. The bilateral bills here refer to the bills containing data on both sides in the gateway statement and the bank statement, the gateway statement and the document statement, and the document statement and the flow statement, i.e., the bill data of two parties.

In various embodiments of the present invention, to implement automatic bidirectional checking according to a model, and support multiple data association and matching for complex product logic of each bank, selecting the corresponding reconciliation algorithm after the reconciliation rule is executed at step 3 further include: when the reconciliation task is to execute an inbound transaction and is configured with the one-to-more reconciliation rule, selecting a difference reconciliation algorithm to perform a first reconciliation operation, in which the first reconciliation operation includes: confirming a checked target field in the one-to-more reconciliation rule, acquiring a master bill and a slave bill and performing a loop circle operation, accumulating amounts under the same target field in the slave bill to obtain an accumulated amount, and matching the accumulated amount with the same data in the master bill, in which if the match is successful, the reconciliation is the balance reconciliation; otherwise, the reconciliation is not the balance reconciliation, the operation is ended. It may be understood that the difference reconciliation algorithm is performed as follows: the reconciliation task is inbound transaction analysis configured with a one-to-more reconciliation rule, and bank + amount + currency is checked, and the master bill and the slave bill are acquired and the loop circle operation is performed. Amounts under the same bank and the same currency in the slave bill are accumulated to obtain an accumulated amount, a corresponding bank + amount + currency after accumulation is assembled, and finally if the bilateral bills are matched with each other, the reconciliation is a balance reconciliation, otherwise, the reconciliation is not the balance reconciliation, the operation is ended. When the reconciliation task is to execute the inbound transaction and is configured with the one-to-one reconciliation rule, selecting a standard reconciliation algorithm to perform a second reconciliation operation, in which the second reconciliation operation includes: acquiring the master bill and the slave bill and performing the loop circle operation, performing a preset sequence arrangement according to a target field, and performing matching on data in the target field in the secondary bill, in which if data under the target field in the sequence is matched, the reconciliation is the balance reconciliation, the operation is ended. It may be understood that the standard reconciliation algorithm is performed as follows: the standard reconciliation algorithm is applicable to most scenarios. The reconciliation task is inbound transaction analysis configured with a one-to-one reconciliation rule. The master reconciliation ID + amount + currency is checked, the master bill and the slave bill are acquired and the loop circle operation is performed from the master bill to the slave bill, the master bill is arranged in reverse order according to the above three fields and then checked with the related fields of the slave bill. If a first piece of the slave bill is matched, the operation is ended and the reconciliation is the balance reconciliation, otherwise, the matching continues until all sets are traversed. When the reconciliation task is to execute a transfer transaction and is configured with the one-to-one reconciliation rule, selecting a data matching algorithm to perform a third reconciliation operation, in which the third reconciliation operation includes: acquiring the master bill and the slave bill and performing the loop circle operation, performing data filtering on the master bill and the slave bill according to a preset condition, and perform matching on the same piece of data in the master bill and the slave bill after being concatenated with an amount according to a respective target field. If the match is successful, the reconciliation is the balance reconciliation; otherwise, the reconciliation is not the balance reconciliation, the operation is ended. It may be understood that a data matching algorithm is performed as follows: the data matching algorithm is applicable to a basic default scenario in a majority of ranges, and is configured for general logic processing. The reconciliation task is transfer transaction analysis configured with a one-to-one reconciliation rule. The master reconciliation ID + amount is checked, the master bill and the slave bill are acquired and the loop circle operation is performed from the master bill to the slave bill, the bilateral bills are screened by the preset rule and the preset condition, the bilateral bills are matched after being concatenated with the amount according to a respective master reconciliation ID. If the matching is successful, the reconciliation is the balance reconciliation, otherwise, the reconciliation is not the balance reconciliation, and the operation is ended. The target field includes one or more combinations of a bank, an amount, a currency, and the master reconciliation ID.

The loop circle operation may specifically include: comparing a first piece of master bill data with a first piece of slave bill data, determining, according to a comparison result, whether the first piece of master bill data is matched with the first piece of slave bill data, and cyclically acquiring a second piece of slave bill data from the slave bill until the matching is successful, and the reconciliation is the balance reconciliation, otherwise, outputting an unbalanced reconciliation result.

In the present embodiment, a principle of a reconciliation operation process performed on the foregoing information flow may be specifically as follows.
1. Due to particularity and complexity of cross-border services, reconciliation scenarios are different from each other, a reconciliation rule engine center is abstracted, and each system interaction and type are grouped and set, which are collectively referred to as reconciliation tasks.
2. Reconciliation task configurating module: composing members of the reconciliation tasks, bilateral bill checking, reconciliation types, and reconciliation service types.
3. The reconciliation task is triggered to be executed by the reconciliation engine.
4. Reconciliation engine: firstly, the statement data in the data source may be acquired, such as the gateway statement, the bank statement, the document statement, and the flow statement. To overcome the bottleneck of high data concurrency, the single check data may be read in the Redis cache. A master side may obtain the Redis cache data by querying a Loop mode in the DB data in the Cousor manner. The data is prepared for calling the reconciliation rule engine to obtain the corresponding rules and use the self-developed reconciliation algorithm.
5. A specific reconciliation algorithm is as follows.
   a) HASH algorithm.
   b) Difference reconciliation algorithm: after the reconciliation rule is acquired, checking is performed by the difference reconciliation algorithm. For example, the reconciliation rule is acquired as one to one and checking the master reconciliation ID + amount + currency, and the bilateral bill data is obtained. The loop circle operation is performed from a master side to a slave side, the master bill is arranged in reverse order according to the above three fields and then checked with the related field values of the slave side. If a first piece of the slave side is matched, the operation is ended and the reconciliation is the balance reconciliation, otherwise, the matching continues until all sets are traversed.
   c) Standard reconciliation algorithm: in some scenarios, the field information may be different not materially. The reconciliation rule is acquired, the reconciliation is performed after the fields are consistent by formatted checking.
   d) Data matching algorithm: matching items that meet conditions are filtered out according to specified rules and conditions.
   e) Exception detecting algorithm: an exception module and the rule engine are established based on history data. According to service requirements and experience, a series of rules and conditions are set to filter out abnormal transactions or bills, such as abnormal amounts and abnormal time intervals.
6. Reconciliation task configuration module: one side corresponding to a piece of data.
7. Rule engine may dynamically set flexible reconciliation rules. A standard may include the following rules.
   a) One to one, an account number and amount accumulation method: after the amount is accumulated in bilateral bills in the account number dimension, checking the accumulated amount one to one bilaterally.
   b) One to one, a field matching method: after a specified field is set, matching all the checked fields one to one in bilateral bills.
   c) One to more, a master reconciliation ID and amount accumulation method: accumulating amounts with the same master reconciliation ID on a slave side and changing to one piece before matching.
   d) More to one, a master reconciliation ID and amount accumulation method: accumulating amounts with the same master reconciliation ID on a master side and changing to one piece before matching. The bilateral bills here refer to the bills containing data on both sides in the gateway statement and the bank statement, the gateway statement and the document statement, and the document statement and the flow statement, i.e., the bill data of two parties.
8. Reconciliation result production: the distributed unique ID under high concurrent is generated by the snowflake algorithm.
9. Error center module: this is configured to carry and process data that is not in the balanced reconciliation. Check processing of exception data mainly includes hanging accounts, write-off accounts, and date switching. i. Funding Level: since the system connects with N channels, such as overseas banks, three-party payment institutions, domestic banks, etc., each bank does not have a unified standard, and multiple repair manners may occur, such as one to one, one to more, and more to one. ii. One to one: some fields are inconsistent when the bank interacts with the service system, and the master reconciliation ID and amount are inconsistent when the reconciliation between the gateway and the bank is not balanced. iii. More to one: the bank actively consolidates several transactions issued by the system into one settlement. iv. One to more: the bank actively split and settle a large amount. v. Document Level: due to non-unified interaction between service systems or improper payment operation, such as manual adjustment amount of the refund and the document number error manually entered. vi. One to more and more to one do not exist, reconciliation of information flow will be automatically merged without repair.

The specific implementation steps of error data processing and repair in response to the above problems include: starting a normal reconciliation mode, comparing the master bill with the slave bill, and when an output comparison result shows that the slave bill is not balanced, determining whether the slave bill is a one-side bill; if the slave bill is not a one-side bill, determining whether the amount of the slave bill is different from that of the master bill, if the amount of the slave bill is different from that of the master bill, registering a master/slave one-side bill error record, periodically triggering to acquire the error record for global error record matching, and transferring the error record to the unified reconciliation center to perform a unified reconciliation engine; if the slave bill is a one-side bill, registering a slave one-side bill error, transmitting error data to a Pending system to confirm whether the error data is in-transit fund data, and meanwhile, transmitting the error data to an error processing center for the check operation of abnormal data, determining whether the error data needs to be cancelled, if the error data needs to be cancelled, performing a write-off operation until balance reconciliation, if the error data does not need to be cancelled, transmitting the error data to an error pool for reconciliation; and when the error data still exists after all the foregoing manners is performed, performing a repair operation on the error data, in which the repair operation includes: performing a split operation or a combination operation on a plurality of pieces of data in the error data according to a preset repair field, and performing reconciliation until balance reconciliation, referring to FIG. 5. In the present embodiment, for a transaction, bookkeeping may be as follows: Case 1: the issuer deducts (accounts), but the acquirer does not. Case 2: the issuer deducts (accounts), and the acquirer accounts. Case 3: the issuer does not deduct, and the acquirer accounts. Case 4: the issuer does not deduct, and the acquirer does not account. Case 1 and Case 3 may be the one-side bill, i.e. only one side accounts. Case 2 may be two-side bill, i.e. both sides accounts.

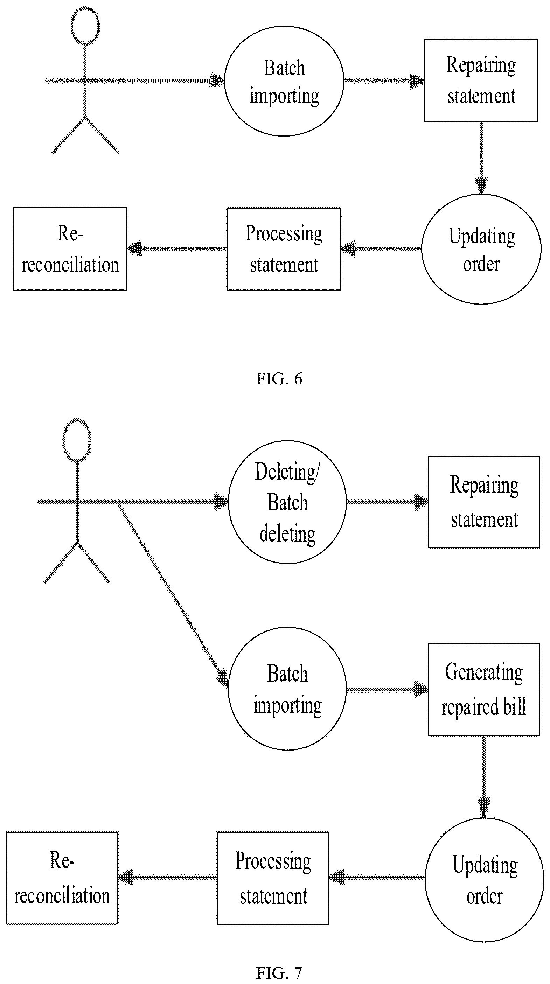

It could be understood that the difference service process: i. balance reconciliation reason: daily switching balance reconciliation and write-off account. ii. Writ-off type: write-off accounting of offline issue, repeat issue, associated write-off, etc. In the present embodiment, the repair operation is performed by a repair center module, the bill data with inconsistent unique ID is restored to the bill data with the same unique ID. Some scenario data may be reconciliated actually, but not be reconciliated since payment or settlement is performed by multiple banks. Settlement reconciliation includes the full-link reconciliation. Taking a collection line reconciliation model as an example, there are fund-level reconciliation, document-level reconciliation, and flow-level reconciliation. In the actual service reconciliation process, there will be many situations where the reconciliation is not balanced, and the reconciliation can only be balanced after manual/automatic intervention and repair. Therefore, the repair center module may be established, which is mainly configured to modify various fields required for bill reconciliation and merge and split bills. In the repair center, it is commonly known as one to one, one to more, and more to one. Fields involved in repair: amount, master reconciliation ID, channel, large account number, currency, reconciliation sub-type, counterparty department, and financial BU (business unit). The specific importing repair process may refer to FIG. 6, and deleting/importing repair process may refer to FIG. 7.

In various embodiment of the present invention, in the case of high concurrency in a clearing and settlement system, a unique ID may need to be generated when generating the corresponding database table. Therefore, an ID generator is required. The Snowflake algorithm is an algorithm for generating the unique ID, mainly configured in distributed systems. The ID generator can generate a globally unique ID without relying on other storage facilities such as databases. An existing snowflake algorithm includes a 1-bit sign bit, a 41-bit timestamp, a 10-bit machine identification, and a 12-bit counting sequence number. Defects of the existing snowflake algorithm are as follows: 1. Using time problem. The time calculation starts from 1970 and can only be used for 69 years. 2. Occupying more space. It takes up more storage space that more digits are used to indicate the timestamp. 3. Clock callback problem. If the system clock is called back, duplicate ID or invalid ID will be generated. Due to long timestamps, higher clock resolution may be required to ensure that the same ID is not repeated. If the clock resolution is insufficient, a risk of ID conflicts may increase. 4. Performance problems at high concurrency. The larger the generation, the slower the speed. 5. Easy to cause single point failure. 6. Extensibility limited. There is no rule or service meaning. The ID is only an ID in a certain sense. If a service needs a distributed ID with meaning, it is not desirable.

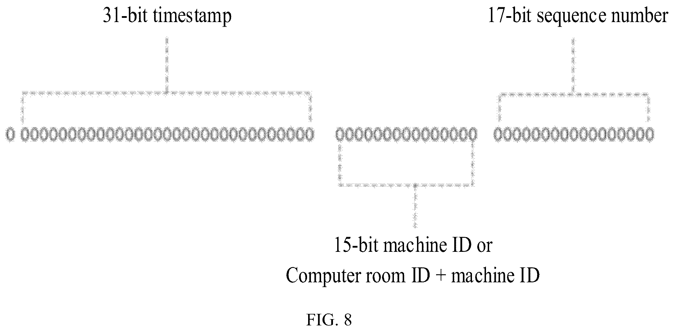

Second improvement of a native snowflake algorithm may be performed based on Twitter, referring to FIG. 8.

An identification bit has 1 bit, the highest bit, always zero, and does not make any sense, since the only computer binary complement is a negative number, zero is a positive number.

The timestamp has 31 bits, changed to seconds, and 31-bit binary can be used for 69 years, time is theoretically permanently incremented, so this sort is possible.

The machine ID has 15 bits, which can all be used as machine ID. Computer room may adopt IP/31 network segment, which fully meets ID of 32768 machines.

The counting sequence number has 17 bits, i.e., at the same time on the same machine, it can theoretically generate different IDs, and 17-bit sequence number can distinguish 131071 IDs.

In order to generate 130000 IDs per second through the secondary improvement of the snowflake algorithm in a high-concurrency scenario in a distributed environment, the specific scheme for generating the unique target ID based on the optimized snowflake algorithm may further include: acquiring a first timestamp in a current state, and performing a division operation on the first timestamp to obtain a second timestamp in a second level; acquiring a third timestamp of a previous generation of ID, and determining whether the third timestamp is the same as the second timestamp; when the second timestamp is different from the third timestamp, if the second timestamp is less than the third timestamp, falling back a system clock, and taking the third timestamp as the second timestamp; when the second timestamp is the same as the third timestamp, generating the ID in the same second, generating a sequence number by self-accretion, assigning the sequence number to a variable s, and determining, by performing AND operation on the variable s and the sequence number, whether the sequence number reaches a maximum threshold; when the maximum threshold is reached, a current thread entering a sleep state until entering a next second, in which the variable s is configured to store the sequence number; and generating a hybrid code by combining a preset shift operation and a function call, in which the hybrid code is obtained in the following manner: left shifting the second timestamp by a preset bit to acquire a timestamp part, acquiring an identifying part of a work node by the function call, performing a bitwise OR operation on the sequence number s, to obtain a final hybrid code, and returning a generated distributed ID.

The specific implementation code in the present embodiment is as follows:

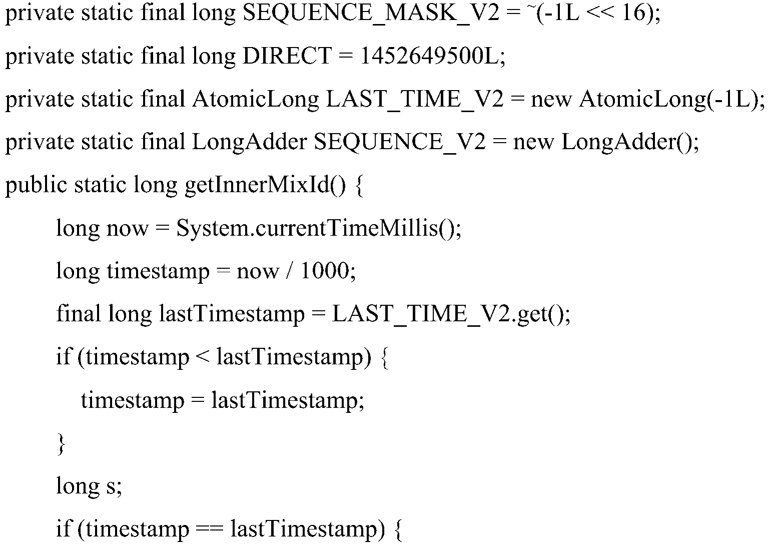

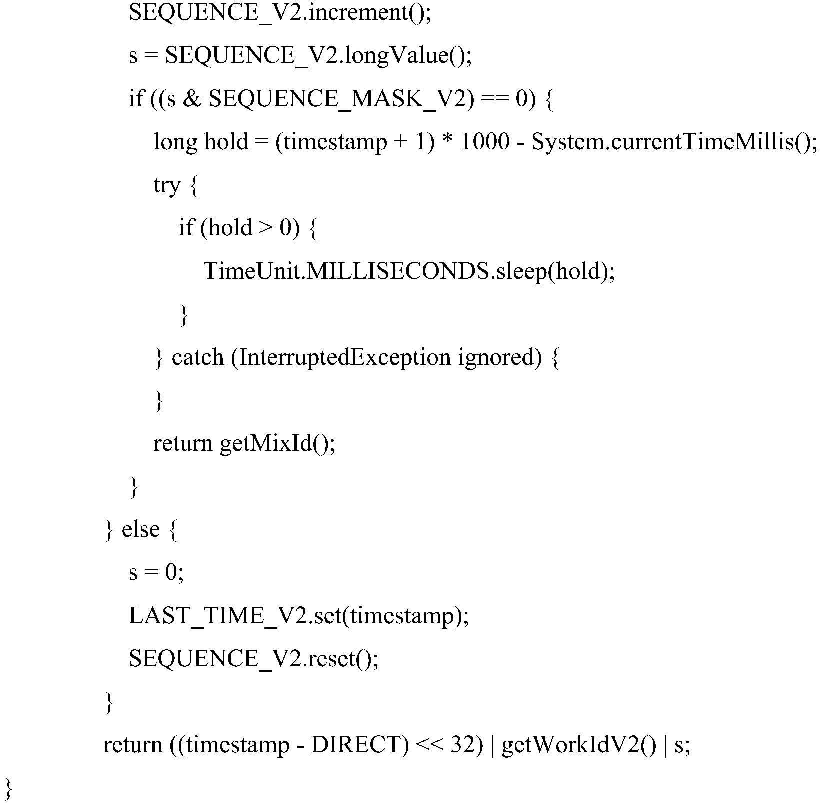

A core description of the above ID generation principle may be as follows.
1. Firstly, a getInnerMixId () method is called to acquire the generated distributed ID. 2. The current timestamp denoted as now is acquired and divided by 1000 to get the timestamp in seconds. 3. The value of LAST_TIME_V2 is acquired, which is the timestamp of the previous generation of ID. 4. If timestamp is less than lastTimestamp, it indicates that the time is falling back, the timestamp is set to lastTimestamp. 5. Variable denoted as s is defined to store the sequence number. 6. If timestamp is equal to lastTimestamp, it indicates that the ID is generated in the same second, the value of the sequence number SEQUENCE_V2 is increased and assigned to s. If the result of the sum of s and SEQUENCE_MASK_V2 is zero, it indicates that the sequence number has reached the maximum value, and it needs to wait for the next second to generate the ID. The waiting time denoted as hold is calculated, and then the thread is dormant through TimeUnit.MILLISECONDS.sleep (hold) until the next second. 7. If timestamp is not equal to lastTimestamp, it indicates entering a new second and the value of the sequence number SEQUENCE_V2 is reset to zero. 8. Finally, a hybrid code is generated by combining a shift operation and a function call: performing (timestamp-DIRECT) << 32, i.e., left shifting by 32 bits, and acquiring a timestamp part; Use the getWorkIdV2 method to obtain the work node identification part, acquiring an identifying part of a work node by a getWorkIdV2 () method, performing a bitwise OR operation on the sequence number s, to obtain a final hybrid code. 9. The generated distributed ID is returned. LAST_TIME_V2 respects the timestamp of the ID obtained last time, SEQUENCE_V2 respects sequence number definition for concurrent requests under the same timestamp, and a default value of SEQUENCE_V2 is zero, SEQUENCE_MASK_V2 respects the maximum number of concurrency, DIRECT respects default initialization value of the timestamp (second) of the snowflake algorithm to extend the maximum life cycle of the snowflake algorithm.

In summary, advantages of generating the unique target ID by the improved snowflake algorithm may include: 1. High concurrent generation of IDs: by properly allocating and managing the work node (workId) and the sequence number (seq), the improved scheme can generate 130000 unique IDs in one second. This allows the snowflake algorithm ideal for ID generation in high-concurrency scenarios. 2. Accurate timestamp: the 31-bit timestamp, compared with the 41-bit timestamp of the existing snowflake algorithm, can provide a longer time range, and the requirement of clock resolution is low. The fewer digits the timestamp has, the lower clock resolution is required, which reduces dependence on high-performance clocks. This enables longer-term ID generation and avoids potential problems of time overlap. 3. Detail ID bit: an ID bit is introduced for reconciliation details to help distinguish different types of services or data, and facilitates subsequent data processing and analysis. 4. Extensibility: 15-bit work node (workId) is adopted in the improved scheme, which provides extensibility of up to 32768 work nodes for the system. This means that the number of work nodes can be easily increased or adjusted to meet service expansion needs. 5. Less space occupation: compared with the 41-bit timestamp, the 31-bit timestamp requires less storage space, which means that it solves a huge problem of massive data storage in high-concurrency reconciliation scenarios. 6. Simple and efficient: the improved scheme is relatively simple and easy to understand compared to other complex ID generation algorithms. Meanwhile, the basic of the snowflake algorithm is adapted to maintain efficient ID generation performance. 7. For single point failure problem, there are two ways to implement snowflake algorithm, one is to provide tool class, and the other one is to serve as distributed ID service. The tool class can be integrated by the service system to avoid single point failure of more than 90%.

In various embodiments of the present invention, before responding to the reconciliation request of the cross-border service, the method further includes: establishing a data exchange path between a reconciliation service system and a financial system, generating the unified reconciliation center according to the data exchange path and performing convergence case-management, and establishing a distributed ID generation service based on the optimized snowflake algorithm to generate a plurality of target IDs in a high-concurrency environment; when the current process is in a bill parsing state, generating a first target ID based on the established ID generation service, marking the reconciliation data according to the first target ID, and recording a flow process of the reconciliation data in the bill parsing state; when the current process is in a reconciliation execution state, generating a second target ID based on the established ID generation service, marking the reconciliation data according to the second target ID, and recording a flow process of the reconciliation data in the reconciliation execution state; and when the current process is in a data penetrating state, performing bill association across reconciliation dimensions according to the first target ID to match with a cross-level data relationship, generating penetration information from the information flow to the fund flow, and ensuring, in a timely manner according to the penetration information, that an exception is discovered and prompted. It facilitates dealing with the complicated cross-border payment and the complete closed-loop from the user information flow to the fund flow without the unified standard, so as to ensure that any error between the service and the system can be discovered through the reconciliation system, and the difference in the full link can be handled and operated.

The difficulty of penetration implementation in the present embodiment may be as follows: 1. Multi-level data association: association and analysis are performed on data at various levels of different service lines, which involves matching of multiple data sources and dimensions, and problems such as different data formats and identifier fields need to be resolved. 2. Data inconsistency: an actual fund account period of the bank and the customer flow date may be subject to daily switching and risk control problems, resulting in time inconsistency of the data. It is an important difficulty that how to accurately associate the account period with the flow information and deal with inconsistencies. 3. Exception handling: during the penetration, there may be a case in which one party has data but the other party has no data, or a flow or flow document is missing. It is a challenge that how to handle these exceptions and ensure accuracy and completeness of the penetration.

For the foregoing defects, the penetration function provided in the present embodiment aims to concatenate reconciliation data of various links of different service lines, so as to form a clear trend image of a service data information flow and a fund flow.

In view of a problem that an actual fund account period of the bank is inconsistent with the customer flow date, for example, the daily switching or the risk control, the penetration technology in the present invention may associate each piece of detail transaction data with an account period of the bank at layers, including a processing status of an intermediate link and a to-be-processed item (Pending), and may accurately determine an actual account period and a fund flow direction of each transaction. In addition, in order to support calculation of a clearing and settlement OP (Operating Profit) and a financial OP, the penetration function may be considered a prerequisite. The penetration function may ensure smooth progress of the clearing and settlement operation and the financial operation by providing necessary bedding.

The present invention provides a penetration method, which is configured to associate and analyze data at various levels of different service lines, so as to disclose a clear service data information flow and a fund flow trend. A specific penetration logic may be as follows.

In a penetration logic of a bank channel type, a bill association across reconciliation dimensions may be implemented by performing penetration analysis on bank/channel bills, gateway orders, document information, and flow information. In terms of a fund layer, the penetration logic may ensure that on a premise that fund reconciliation details are balanced, the penetration information is brought into a service statement according to the bilateral data, and the corresponding fund Pending information is marked in synchronization. In terms of a document layer, the penetration information in a service order is carried into the flow document based on the condition that the fund detail is balanced and the fund layer has been penetrated. In terms of a flow layer, when the flow document and the flow statement are balanced, it may be implemented that the penetration information in the flow document is penetrated into the flow statement.

In a penetration logic of a channel type, a bill association across reconciliation dimensions may be implemented by performing penetration analysis on channel bills, transaction orders, transaction vouchers, and customer flows. On a premise that the channel detail is balanced, the penetration logic may carry the penetration information into the transaction order statement according to the bilateral data conditions, and the corresponding channel detail Pending information is marked in synchronization. In terms of a document layer, the penetration information in the transaction order is carried into the transaction voucher based on a condition that the channel details are balanced and the fund layer has been penetrated. In terms of a flow layer, when the flow document and the flow statement are balanced, it may be implemented that the penetration information in the flow document is penetrated into the flow statement.

In addition, in a penetration logic of a transfer type, a bill association across reconciliation dimensions may be implemented by performing penetration analysis on transfer-out (transfer-in) document and service line flow. On a premise that the reconciliation at each level is balanced, the penetration logic may determine master bill direction according to a service attribute, and perform penetrating with the penetration information of bilateral service documents according to time sequence. In terms of a flow layer, on a premise that all the document layers are balanced and have been penetrated, it may be ensured that penetrating is performed with the penetration information in the flow document into a flow statement.

A breakthrough point of implementing penetration in the foregoing embodiment may be as follows: 1. Bill association across reconciliation dimensions: bill association across reconciliation dimensions is performed by an original bill ID (unified), to implement accurate data matching and association between different levels, and provide a comprehensive service data information flow and fund flow trend. 2. Accurate transmission of penetration information: for data relationships between different levels, the penetration information is accurately transmitted to statements at different levels, ensuring consistency and accuracy of data. 3. Pending Information synchronization: during the penetration process, corresponding funds and channel details Pending information are marked with the penetration information in synchronization, so that information such as in-transit funds and transaction status can be accurately displayed. The Pending information refers to in-transit funds information that has occurred on the bank side and has not been added or deducted to the customer account due to reasons such as daily switching or risk control review. 4. Exception handling strategy: for abnormal conditions, such as no data and missing data, corresponding processing logics and supplementary measures are provided to ensure stability and integrity of the penetration process.

In conclusion, the penetration logic may implement accurate cross-level data association and penetration by solving difficulties such as multiple-level data association, data inconsistency, and exception processing, which has a relatively high technical breakthrough point. This penetration logic may provide reliable data support for clearing and settlement operations and financial operations, and improve reconciliation accuracy and efficiency.

In conclusion, the penetration logic provided in the present invention may provide an efficient solution for reconciliation between different service lines by accurate data association and matching, and effectively disclose the service data information flow and the fund flow trend. This penetration logic may have important application value in fields of clearing and settlement operations and financial operations.

### A second embodiment

Based on the same inventive concept, a full-link reconciliation apparatus based on a snowflake algorithm is provided in the present invention, including an acquiring module, a parsing module, a reconciliation module, a determining module, and a penetrating module.

The acquiring module is configured for responding to a reconciliation request of a cross-border service and acquiring bill source data from a service end.

The parsing module is configured for parsing the bill source data based on a unified reconciliation center, and converting the bill source data into target bill data.

The reconciliation module is configured for calling a reconciliation rule engine to acquire a corresponding reconciliation rule to match with different data admission conditions of a cross-border payment end, selecting a corresponding reconciliation algorithm after the reconciliation rule is executed, and performing a full-link reconciliation task on the target bill data to acquire a reconciliation result. The reconciliation task includes a fund reconciliation, a document reconciliation, and a flow reconciliation.

The determining module is configured for determining whether the reconciliation result is a balance reconciliation in a process of performing the full-link reconciliation task, and transmitting unbalanced data to a corresponding exception processing system for a check processing of abnormal data until the reconciliation result is a balance reconciliation. The balance reconciliation means that a balance acquired from a service system at the same moment is the same as that acquired from a financial system.

The penetrating module is configured for generating, based on an optimized snowflake algorithm, a unique target ID to perform a corresponding bill association with the reconciliation result, automatically penetrating, according to the unique target ID corresponding to the reconciliation result, full link data of an information flow and a fund flow, and tracing, according to the unique target ID, a whole process of the corresponding bill flowing between the fund flow and the information flow, to achieve a complete closed-loop of reconciliation.

Principle contents and implementation methods of the foregoing acquiring module, the parsing module, the reconciliation module, the determining module, and the penetrating module may be all described in the first embodiment, and not be described herein again.

### A third embodiment

In some embodiments of the present invention, an electronic device is further provided. The electronic device includes a memory and a processor. The memory is configured to store a processing program, and the processor executes the processing program according to an instruction. When the processor executes the processing program, the full-link reconciliation method based on the snowflake algorithm in the foregoing embodiment is implemented.

In some embodiments of the present invention, a readable storage medium is further provided. The readable storage medium may be a non-volatile readable storage medium, or may be a volatile readable storage medium. The readable storage medium stores an instruction. When the instruction runs on a computer, an electronic device including the readable storage medium executes the foregoing full-link reconciliation method based on the snowflake algorithm.

It may be understood that, for the foregoing full-link reconciliation method based on the snowflake algorithm, if all are implemented in a form of a software function module and sold or used as an independent product, the method may be stored in a computer-readable storage medium. Based on such an understanding, the technical solutions of the present invention essentially, or the part contributing to the related art, or all or a part of the technical solutions may be implemented in a form of a software product. The computer software product may be stored in a storage medium and include several instructions for instructing a computer device (which may be a personal computer, a server, or a network device) to perform all or a part of the steps of the method in the embodiments of the present invention. The foregoing storage medium may include any medium that can store program code, such as a USB flash drive, a removable hard disk, a Read-only memory (ROM), a Random-access memory (RAM), a magnetic disk, or an optical disc.

The computer-readable storage medium may include a data signal propagated in a baseband or as part of a carrier, which carries readable program code. The transmitted data signal may be in multiple forms, including but not limited to an electromagnetic signal, an optical signal, or any suitable combination of the foregoing. The readable storage medium may further be any readable medium other than the readable storage medium, and the readable medium may send, propagate, or transmit a program configured to use in an instruction execution system, apparatus, or component, or use in combination with the instruction execution system, apparatus, or component. The program code included in the readable storage medium may be transmitted in any suitable medium, including but not limited to wireless, wired, optical cable, RF (Radio Frequency), or any suitable combination of the foregoing.

The program code involved in the technical solution disclosed in the present invention may be written in any combination of one or more program design languages. The program design languages may include object-oriented program design languages such as Java, C + +, and further include a conventional programming language such as C language or a similar programming language. The program code may be executed completely on a user computing device, partly on the user equipment, as an independent package, partly on the user computing device and partly on the remote computing device, or completely on the remote computing device or server. In a case involving the remote computing device, the remote computing device may be connected to the user computing device by any type of network, including a local area network (LAN) or a wide area network (WAN), or may be connected to an external computing device (for example, connected by Internet provided by an Internet service provider).

Finally, it should be noted that the foregoing embodiments are merely used to describe the technical solutions of the present invention, but are not limited thereto. Although the present invention is described in detail with reference to the foregoing embodiments, one skilled in the art should understand that the foregoing embodiments may still modify the technical solutions described in the foregoing embodiments, or perform equivalent replacement on some of the technical features. However, these modifications or substitutions do not leave the essence of the corresponding technical solutions away from the spirit and scope of the technical solutions in the embodiments of the present invention.

## Claims

1. A full-link reconciliation method based on a snowflake algorithm, **characterized by** comprising:
responding to a reconciliation request of a cross-border service and acquiring bill source data from a service end;
parsing the bill source data based on a unified reconciliation center, and converting the bill source data into target bill data;
calling a reconciliation rule engine to acquire a corresponding reconciliation rule to match with different data admission conditions of a cross-border payment end, selecting a corresponding reconciliation algorithm after the reconciliation rule is executed, and performing a full-link reconciliation task on the target bill data to acquire a reconciliation result, wherein the reconciliation task comprises a fund reconciliation, a document reconciliation, and a flow reconciliation;
determining whether the reconciliation result is a balance reconciliation in a process of performing the full-link reconciliation task, and transmitting unbalanced data to a corresponding exception processing system for a check processing of abnormal data until the reconciliation result is a balance reconciliation, wherein the balance reconciliation means that a balance acquired from a service system at the same moment is the same as that acquired from a financial system;
generating, based on an optimized snowflake algorithm, a unique target ID to perform a corresponding bill association with the reconciliation result, automatically penetrating, according to the unique target ID corresponding to the reconciliation result, full link data of an information flow and a fund flow, and tracing, according to the unique target ID, a whole process of the corresponding bill flowing between the fund flow and the information flow, to achieve a complete closed-loop of reconciliation;
wherein generating, based on the optimized snowflake algorithm, the unique target ID further comprises:
acquiring a first timestamp in a current state, and performing a division operation on the first timestamp to obtain a second timestamp in a second level;
acquiring a third timestamp of a previous generation of ID, and determining whether the third timestamp is the same as the second timestamp;
when the second timestamp is different from the third timestamp, if the second timestamp is less than the third timestamp, falling back a system clock, and taking the third timestamp as the second timestamp;
when the second timestamp is the same as the third timestamp, generating the ID in the same second, generating a sequence number by self-accretion, assigning the sequence number to a variable s, and determining, by performing AND operation on the variable s and the sequence number, whether the sequence number reaches a maximum threshold;
when the maximum threshold is reached, a current thread entering a sleep state until entering a next second, wherein the variable s is configured to store the sequence number; and
generating a hybrid code by combining a preset shift operation and a function call, wherein the hybrid code is obtained in the following manner: left shifting the second timestamp by a preset bit to acquire a timestamp part, acquiring an identifying part of a work node by the function call, performing a bitwise OR operation on the sequence number s, to obtain a final hybrid code, and returning a generated distributed ID, wherein the optimized snowflake algorithm comprises a 1-bit identification bit, a 31-bit timestamp bit, a 15-bit operation machine id, and a 17-bit sequence number;
parsing the bill source data based on the unified reconciliation center, and converting the bill source data into the target bill data further comprises:
triggering a data acquiring operation according to a service notification or a preset time, generating a reconciliation collection task, and executing a corresponding download task;
reading the download task, periodically executing the download task, and determining whether the target bill file is downloaded;
if yes, reading an unparsed record of the target bill file, triggering a parsing operation on the target bill file, selecting a corresponding parsing template according to a preset file type, parsing data in the target bill file and warehousing, performing data cleaning and conversion to a target statement, and generating a conversion record according to a reconciliation dimension; and
if no, determining whether the current quantity of downloads reaches the maximum quantity of attempts;
if no, continuing to try the download task again; and
if yes, determining whether there is a downloaded file;
if yes, marking success; and
if no, performing a failure alarm,
wherein the target bill file comprises a bank bill and a non-bank bill;
calling the reconciliation rule engine to acquire the corresponding reconciliation rule further comprises:
in a one-to-one reconciliation rule pattern, extracting a piece of the target bill data of a first counterparty and a piece of the target bill data of a second counterparty, accumulating amounts bilaterally according to a preset dimension and a preset amount accumulation algorithm, and in a case of bilateral reconciliation, matching an accumulative amount of the first counterparty with and an accumulative amount of the second counterparty, and determining whether it is the balance reconciliation, wherein the preset dimension comprises at least an account number or a master reconciliation ID;
in a one-to-one reconciliation rule pattern, extracting a piece of the target bill data of the first counterparty and a piece of the target bill data of the second counterparty, and after setting a target field according to a field matching algorithm, matching the target field of the first counterparty with the target field of the second counterparty, and determining whether it is the balance reconciliation; and
in a one-to-more or more-to-one reconciliation rule pattern, extracting a piece of the target bill data of the first counterparty and a plurality of pieces of the target bill data of the second counterparty, or extracting a plurality of pieces of the target bill data of the first counterparty and a piece of the target bill data of the second counterparty, accumulating amounts unilaterally according to a preset amount accumulation algorithm, and in a case of unilateral reconciliation, matching an accumulative amount of a plurality of master/slave bills with the same attribute of the master reconciliation ID with an amount in a corresponding slave/master bill, determining whether it is the balance reconciliation,
wherein the target bill data comprises a gateway statement, a bank statement, a document statement, and a flow statement;
selecting the corresponding reconciliation algorithm after the reconciliation rule is executed further comprises:
when the reconciliation task is to execute an inbound transaction and is configured with the one-to-more reconciliation rule, selecting a difference reconciliation algorithm to perform a first reconciliation operation, wherein the first reconciliation operation comprises: confirming a checked target field in the one-to-more reconciliation rule, acquiring a master bill and a slave bill and performing a loop circle operation, accumulating amounts under the same target field in the slave bill to obtain an accumulated amount, and matching the accumulated amount with the same data in the master bill, wherein if the match is successful, the reconciliation is the balance reconciliation; otherwise, the reconciliation is not the balance reconciliation, the operation is ended;
when the reconciliation task is to execute the inbound transaction and is configured with the one-to-one reconciliation rule, selecting a standard reconciliation algorithm to perform a second reconciliation operation, wherein the second reconciliation operation comprises: acquiring the master bill and the slave bill and performing the loop circle operation, performing a preset sequence arrangement according to a target field, and performing matching on data in the target field in the secondary bill, wherein if data under the target field in the sequence is matched, the reconciliation is the balance reconciliation, the operation is ended; and
when the reconciliation task is to execute a transfer transaction and is configured with the one-to-one reconciliation rule, selecting a data matching algorithm to perform a third reconciliation operation, wherein the third reconciliation operation comprises: acquiring the master bill and the slave bill and performing the loop circle operation, performing data filtering on the master bill and the slave bill according to a preset condition, and perform matching on the same piece of data in the master bill and the slave bill after being concatenated with an amount according to a respective target field, wherein if the match is successful, the reconciliation is the balance reconciliation; otherwise, the reconciliation is not the balance reconciliation, the operation is ended;
wherein the target field comprises one or more combinations of a bank, an amount, a currency, and the master reconciliation ID; and
transmitting unbalanced data to a corresponding exception processing system for check processing of abnormal data until the reconciliation result is a balance reconciliation further comprises:
starting a normal reconciliation mode, comparing the master bill with the slave bill, and when an output comparison result shows that the slave bill is not balanced, determining whether the slave bill is a one-side bill;
if no, determining whether the amount of the slave bill is different from that of the master bill, if yes, registering a master/slave one-side bill error record, periodically triggering to acquire the error record for global error record matching, and transferring the error record to the unified reconciliation center to perform a unified reconciliation engine;
if yes, registering a slave one-side bill error, transmitting error data to a Pending system to confirm whether the error data is in-transit fund data, and meanwhile, transmitting the error data to an error processing center for the check operation of abnormal data, determining whether the error data needs to be cancelled, if yes, performing a write-off operation until balance reconciliation, if no, transmitting the error data to an error pool for reconciliation; and
when the error data still exists after all the foregoing manners is performed, performing a repair operation on the error data, wherein the repair operation comprises: performing a split operation or a combination operation on a plurality of pieces of data in the error data according to a preset repair field, and performing reconciliation until balance reconciliation.

2. The method of claim 1, wherein before calling the reconciliation rule engine, the method further comprises:
performing reconciliation configuration on an information flow corresponding to the bill source data, checking the reconciliation configuration, wherein checking the reconciliation configuration comprises determining whether configuration parameters are verified;
after the parameters are verified successfully, determining whether the reconciliation is hedge, when the reconciliation is hedge, performing a restoring operation on differential pool data generated when the previous reconciliation is the balance reconciliation, and then performing a deleting operation on the differential pool data, meanwhile, after a deleting operation is performed on previous reconciliation data, writing the bill source data into Redis in a form of the target statement;
when the parameters are failed to be verified, directly writing the bill source data into the Redis in the form of the target statement;
determining whether a database has an exception in a process of writing the bill source data to the Redis, performing a check operation on the target statement when no exception occurs, and after reading the bill source data generated in the form of the target statement from a cache of the Redis, entering a next operation of calling the reconciliation rule engine,
wherein the bill source data is read from cached data of the Redis in a Cousor manner, and the Cousor manner comprises: triggering a mechanism for extracting one cached data record every time from a result set, which comprises a plurality of cached data records, and when the user accesses any row of cached data in the result set, placing a cursor on a target row, performing an operation on the target row or a row block at a target location, and acquiring a temporary file formed by a cursor location pointing to a target cache data record in the result set.

3. The method of claim 1, wherein before responding to the reconciliation request of the cross-border service, the method further comprises:
establishing a data exchange path between a reconciliation service system and a financial system, generating the unified reconciliation center according to the data exchange path and performing convergence case-management, and establishing a distributed ID generation service based on the optimized snowflake algorithm to generate a plurality of target IDs in a high-concurrency environment;
when the current process is in a bill parsing state, generating a first target ID based on the established ID generation service, marking the reconciliation data according to the first target ID, and recording a flow process of the reconciliation data in the bill parsing state;
when the current process is in a reconciliation execution state, generating a second target ID based on the established ID generation service, marking the reconciliation data according to the second target ID, and recording a flow process of the reconciliation data in the reconciliation execution state; and
when the current process is in a data penetrating state, performing bill association across reconciliation dimensions according to the first target ID to match with a cross-level data relationship, generating penetration information from the information flow to the fund flow, and ensuring, in a timely manner according to the penetration information, that an exception is discovered and prompted.

4. A full-link reconciliation apparatus based on a snowflake algorithm, **characterized by** comprising an acquiring module, a parsing module, a reconciliation module, a determining module, and a penetrating module, wherein
the acquiring module is configured for responding to a reconciliation request of a cross-border service and acquiring bill source data from a service end;
the parsing module is configured for parsing the bill source data based on a unified reconciliation center, and converting the bill source data into target bill data;
the reconciliation module is configured for calling a reconciliation rule engine to acquire a corresponding reconciliation rule to match with different data admission conditions of a cross-border payment end, selecting a corresponding reconciliation algorithm after the reconciliation rule is executed, and performing a full-link reconciliation task on the target bill data to acquire a reconciliation result, wherein the reconciliation task comprises a fund reconciliation, a document reconciliation, and a flow reconciliation;
the determining module is configured for determining whether the reconciliation result is a balance reconciliation in a process of performing the full-link reconciliation task, and transmitting unbalanced data to a corresponding exception processing system for a check processing of abnormal data until the reconciliation result is a balance reconciliation, wherein the balance reconciliation means that a balance acquired from a service system at the same moment is the same as that acquired from a financial system;
the penetrating module is configured for generating, based on an optimized snowflake algorithm, a unique target ID to perform a corresponding bill association with the reconciliation result, automatically penetrating, according to the unique target ID corresponding to the reconciliation result, full link data of an information flow and a fund flow, and tracing, according to the unique target ID, a whole process of the corresponding bill flowing between the fund flow and the information flow, to achieve a complete closed-loop of reconciliation,
wherein generating, based on the optimized snowflake algorithm, the unique target ID further comprises:
acquiring a first timestamp in a current state, and performing a division operation on the first timestamp to obtain a second timestamp in a second level;
acquiring a third timestamp of a previous generation of ID, and determining whether the third timestamp is the same as the second timestamp;
when the second timestamp is different from the third timestamp, if the second timestamp is less than the third timestamp, falling back a system clock, and taking the third timestamp as the second timestamp;
when the second timestamp is the same as the third timestamp, generating the ID in the same second, generating a sequence number by self-accretion, assigning the sequence number to a variable s, and determining, by performing AND operation on the variable s and the sequence number, whether the sequence number reaches a maximum threshold;
when the maximum threshold is reached, a current thread entering a sleep state until entering a next second, wherein the variable s is configured to store the sequence number; and
generating a hybrid code by combining a preset shift operation and a function call, wherein the hybrid code is obtained in the following manner: left shifting the second timestamp by a preset bit to acquire a timestamp part, acquiring an identifying part of a work node by the function call, performing a bitwise OR operation on the sequence number s, to obtain a final hybrid code, and returning a generated distributed ID, wherein the optimized snowflake algorithm comprises a 1-bit identification bit, a 31-bit timestamp bit, a 15-bit operation machine id, and a 17-bit sequence number;
parsing the bill source data based on the unified reconciliation center, and converting the bill source data into the target bill data further comprises:
triggering a data acquiring operation according to a service notification or a preset time, generating a reconciliation collection task, and executing a corresponding download task;
reading the download task, periodically executing the download task, and determining whether the target bill file is downloaded;
if yes, reading an unparsed record of the target bill file, triggering a parsing operation on the target bill file, selecting a corresponding parsing template according to a preset file type, parsing data in the target bill file and warehousing, performing data cleaning and conversion to a target statement, and generating a conversion record according to a reconciliation dimension; and
if no, determining whether the current quantity of downloads reaches the maximum quantity of attempts;
if no, continuing to try the download task again; and
if yes, determining whether there is a downloaded file;
if yes, marking success; and
if no, performing a failure alarm,
wherein the target bill file comprises a bank bill and a non-bank bill;
calling the reconciliation rule engine to acquire the corresponding reconciliation rule further comprises:
in a one-to-one reconciliation rule pattern, extracting a piece of the target bill data of a first counterparty and a piece of the target bill data of a second counterparty, accumulating amounts bilaterally according to a preset dimension and a preset amount accumulation algorithm, and in a case of bilateral reconciliation, matching an accumulative amount of the first counterparty with and an accumulative amount of the second counterparty, and determining whether it is the balance reconciliation, wherein the preset dimension comprises at least an account number or a master reconciliation ID;
in a one-to-one reconciliation rule pattern, extracting a piece of the target bill data of the first counterparty and a piece of the target bill data of the second counterparty, and after setting a target field according to a field matching algorithm, matching the target field of the first counterparty with the target field of the second counterparty, and determining whether it is the balance reconciliation; and
in a one-to-more or more-to-one reconciliation rule pattern, extracting a piece of the target bill data of the first counterparty and a plurality of pieces of the target bill data of the second counterparty, or extracting a plurality of pieces of the target bill data of the first counterparty and a piece of the target bill data of the second counterparty, accumulating amounts unilaterally according to a preset amount accumulation algorithm, and in a case of unilateral reconciliation, matching an accumulative amount of a plurality of master/slave bills with the same attribute of the master reconciliation ID with an amount in a corresponding slave/master bill, determining whether it is the balance reconciliation,
wherein the target bill data comprises a gateway statement, a bank statement, a document statement, and a flow statement;
selecting the corresponding reconciliation algorithm after the reconciliation rule is executed further comprises:
when the reconciliation task is to execute an inbound transaction and is configured with the one-to-more reconciliation rule, selecting a difference reconciliation algorithm to perform a first reconciliation operation, wherein the first reconciliation operation comprises: confirming a checked target field in the one-to-more reconciliation rule, acquiring a master bill and a slave bill and performing a loop circle operation, accumulating amounts under the same target field in the slave bill to obtain an accumulated amount, and matching the accumulated amount with the same data in the master bill, wherein if the match is successful, the reconciliation is the balance reconciliation; otherwise, the reconciliation is not the balance reconciliation, the operation is ended;
when the reconciliation task is to execute the inbound transaction and is configured with the one-to-one reconciliation rule, selecting a standard reconciliation algorithm to perform a second reconciliation operation, wherein the second reconciliation operation comprises: acquiring the master bill and the slave bill and performing the loop circle operation, performing a preset sequence arrangement according to a target field, and performing matching on data in the target field in the secondary bill, wherein if data under the target field in the sequence is matched, the reconciliation is the balance reconciliation, the operation is ended; and
when the reconciliation task is to execute a transfer transaction and is configured with the one-to-one reconciliation rule, selecting a data matching algorithm to perform a third reconciliation operation, wherein the third reconciliation operation comprises: acquiring the master bill and the slave bill and performing the loop circle operation, performing data filtering on the master bill and the slave bill according to a preset condition, and perform matching on the same piece of data in the master bill and the slave bill after being concatenated with an amount according to a respective target field, wherein if the match is successful, the reconciliation is the balance reconciliation; otherwise, the reconciliation is not the balance reconciliation, the operation is ended;
wherein the target field comprises one or more combinations of a bank, an amount, a currency, and the master reconciliation ID; and
transmitting unbalanced data to a corresponding exception processing system for check processing of abnormal data until the reconciliation result is a balance reconciliation further comprises:
starting a normal reconciliation mode, comparing the master bill with the slave bill, and when an output comparison result shows that the slave bill is not balanced, determining whether the slave bill is a one-side bill;
if no, determining whether the amount of the slave bill is different from that of the master bill, if yes, registering a master/slave one-side bill error record, periodically triggering to acquire the error record for global error record matching, and transferring the error record to the unified reconciliation center to perform a unified reconciliation engine;
if yes, registering a slave one-side bill error, transmitting error data to a Pending system to confirm whether the error data is in-transit fund data, and meanwhile, transmitting the error data to an error processing center for the check operation of abnormal data, determining whether the error data needs to be cancelled, if yes, performing a write-off operation until balance reconciliation, if no, transmitting the error data to an error pool for reconciliation; and
when the error data still exists after all the foregoing manners is performed, performing a repair operation on the error data, wherein the repair operation comprises: performing a split operation or a combination operation on a plurality of pieces of data in the error data according to a preset repair field, and performing reconciliation until balance reconciliation.

5. An electrical device, comprising a memory and a processor, **characterized in that** the memory is configured to store a processing program, and the processor is configured to execute the computer program to implement the full-link reconciliation method based on the snowflake algorithm of any one of claims 1 to 3.

6. A computer-readable storage medium, storing a processing program, **characterized in that** the processing program is executed by a processor to implement the full-link reconciliation method based on the snowflake algorithm of any one of claims 1 to 3.
